# EUROPEAN PATENT SPECIFICATION

(11) **EP 1 722 494 B1**
(45) Date of publication and mention of the grant of the patent: **04.07.2007**
(21) Application number: 05252955.9
(22) Date of filing: 13.05.2005
(51) Int. Cl.: H04B 10/10

(54) **Communications system using lcd optical transmitters and receivers and related method**
Vorrichtung und Verfahren zur optischen Übertragung mittels LCD optische Sendern und Empfängern
Système et procédé de transmission optique par moyens d'émetteurs et récepteurs optiques LCD

(43) Date of publication of application: 15.11.2006
(73) Proprietor: Research In Motion Limited, Waterloo, Ontario N2L 3W8 (CA)
(72) Inventor: Moosavi, Vahid, Ontario, N2R 1K6 (CA); Little, Herbert, A., Ontario, N2T 2V8 (CA)
(74) Representative: Roberts, Gwilym Vaughan

(56) References cited:
- EP-A- 1 022 681
- US-A- 5 815 127
- US-A1- 2002 138 742
- US-A1- 2002 171 639
- US-A1- 2003 004 827
- US-B1- 6 484 260

## Description

### Field of the Invention

The present invention relates to the field of communications, and more particularly, to a communications system and method using optical communication.

### Background of the Invention

Electronic computing devices, such as laptop computers and personal digital assistants (PDAs), allow for increased productivity as well as the ability to more easily transport and transmit data. For example, such devices may include wireless radio frequency (RF) transceivers which allow them to access the Internet and/or send electronic mail (email) messages over a cellular network or a wireless local area network (LAN).

Moreover, such devices may also communicate via wireless personal area networks (PANs), for example. PANs interconnect devices within the range of an individual person, typically within a range of about ten meters. For example, a person may wirelessly interconnect a laptop, a personal digital assistant (PDA), and a portable printer within a relatively close proximity of one another using a common wireless PAN communications protocol, such as the IEEE 802.15 standard.

In certain applications, it may be desirable for such devices to communicate by mediums other than wireless RF signals. For example, infrared and optical signals often provide for convenient wireless device communications at close range with devices that have a clear line of sight to one another. That is, infrared and/or optical communication may be less susceptible to RF interference, and the regulations governing short-range infrared/optical communications are generally less stringent than for RF communications.

One example of a portable device which uses an optical transmitter for short range communications is set forth in U.S. Patent Application Publication No. 2004/0005033 by Nishihara et al. The Nishihara et al. application discloses a cassette for use with a radiographic imaging system using a photo-stimulable media. The cassette includes an optical data transmitter adapted to send an optical output and a controller. The optical transmitter may be a liquid crystal display (LCD) or a light emitting diode(s) (LED), the output of which changes when so instructed by the controller. The cassette has a housing having the optical transmitter and controller, and the optical transmitter is positioned to be externally observable. A further example is US 2002/0171639 Methods and apparatus for transmitting data over graphic displays by Ben-David.

With the ease of data exchange provided by electronic computing devices having wireless communications capabilities, the challenge of protecting an organization's data can be difficult. Accordingly, in some applications it may be desirable to enhance security measures for using such electronic computing devices, while at the same time not stifling the increased productivity such devices can provide. US 2002/0138742 Hamid et al discloses a high security personalized wireless portable biometric device in communication with a plurality of ubiquitous items.

### Brief Description of the Drawings

FIG. 1 is schematic block diagram of a communications system in accordance with the present invention.

FIG. 2 is schematic block diagram of an alternate embodiment of the communications system of FIG. 1.

FIG. 3 is a flow diagram of a communications method in accordance with the present invention.

FIG. 4 is a schematic block diagram illustrating exemplary components of a mobile wireless communications device in accordance with the present invention.

### Detailed Description of the Preferred Embodiments

In view of the foregoing background, it is therefore an object of the present invention to provide a communications system with enhanced security and inter-unit communication features and related methods.

This and other objects, features, and advantages in accordance with the present invention are provided by a communications system which may include first and second separate units, at least one of which may include a radio frequency (RF) transceiver. The first unit may include a liquid crystal display (LCD) including at least one optical transmitter pixel. Further, the second wireless unit may include at least one optical receiver for receiving optical signals from the at least one optical transmitter pixel of the LCD.

By way of example, the first unit may be a wireless communications device (e.g., PDA, laptop, wireless email device, etc.) which may include an RF transceiver for accessing a communications network (e.g., a LAN or cellular network). To keep unauthorized users from accessing sensitive material on a network, or from sending emails from the first unit which include sensitive information, the second unit may be an authentication device which includes an identity reader (e.g., a card reader, fingerprint reader, keypad for entering an access code, etc.). As such, the second unit may be used to enable the first unit to communicate using its RF transceiver based upon a received unique identifier (UID).

Thus, the optical transmitter pixel(s) of the first unit may send a device identifier to the second unit using optical signals, and the second unit compares the device identifier and the UID received from the user via the identity reader with corresponding entries stored in a memory. If the device identifier and UID are validated, then the second unit enables the first unit to begin using its RF transceiver for sending emails, accessing a network, etc. By way of example, the authenticating device may also include an RF transceiver which wirelessly enables the RF transceiver of the first unit.

The at least one optical transmitter pixel may include a plurality thereof, and they may be different color optical transmitter pixels, for example. More particularly, the plurality of different color LCD transmitter pixels may comprise red, blue and green optical transmitter pixels. This advantageously allows a greater quantity of data to be sent from the first unit to the second unit as opposed to using a single color of light. Moreover, one or more of the optical transmitter pixels may transmit optical clock signals. Similarly, the optical receiver may advantageously comprise a plurality of different color optical receivers for respective different color optical transmitter pixels.

The LCD may have a refresh rate, and the optical transmitter pixel(s) may operate based upon the refresh rate. The optical receiver(s) may include at least one optical filter, for example. Furthermore, the RF transceiver may communicate using a wireless local or personal area network protocol. Also, the first unit may include a processor connected to the at least one optical transmitter pixel, and the first and second units may have respective portable housings.

A communications method aspect of the invention may include providing first and second separate units, such as those described briefly above, and transmitting optical signals from the at least one optical transmitter pixel of the first unit. The method may further include receiving the optical signals from the at least one optical transmitter pixel using at least one optical receiver on the second unit.

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

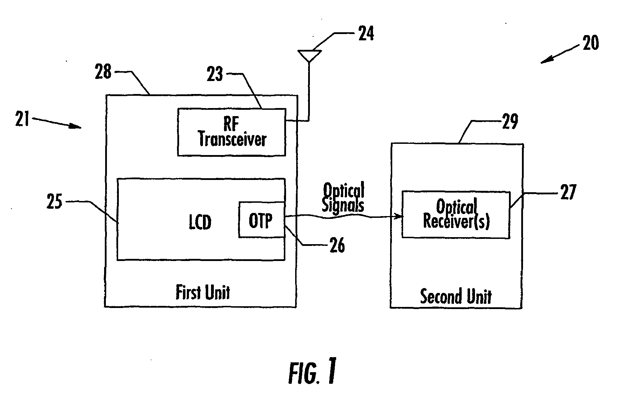

Referring initially to FIG. 1, a communications system **20** illustratively includes first and second separate units **21, 22.** In the exemplary embodiment, the first unit **21** illustratively includes a radio frequency (RF) transceiver **23** and an accompanying antenna **24.** By way of example, the RF transceiver **23** may communicate using a wireless LAN or wireless PAN protocol (e.g., Bluetooth, IEEE 802.11x or 802.15), or it may be a cellular transceiver for communicating via a cellular network. The RF transceiver **23** may also communicate based upon a Federal Information Processing Standard (FIPS) compliant encryption protocol, for example, as will be appreciated by those skilled in the art.

The first unit **21** also illustratively includes a liquid crystal display (LCD) **25** including one or more optical transmitter pixels (OTP) **26.** Further, the second wireless unit **22** illustratively includes one or more optical receivers **27** for receiving optical signals from the optical transmitter pixel(s) **26** of the LCD **25.** The respective components of the first and second units **21, 22** may be carried by respective portable housings **28, 29.**

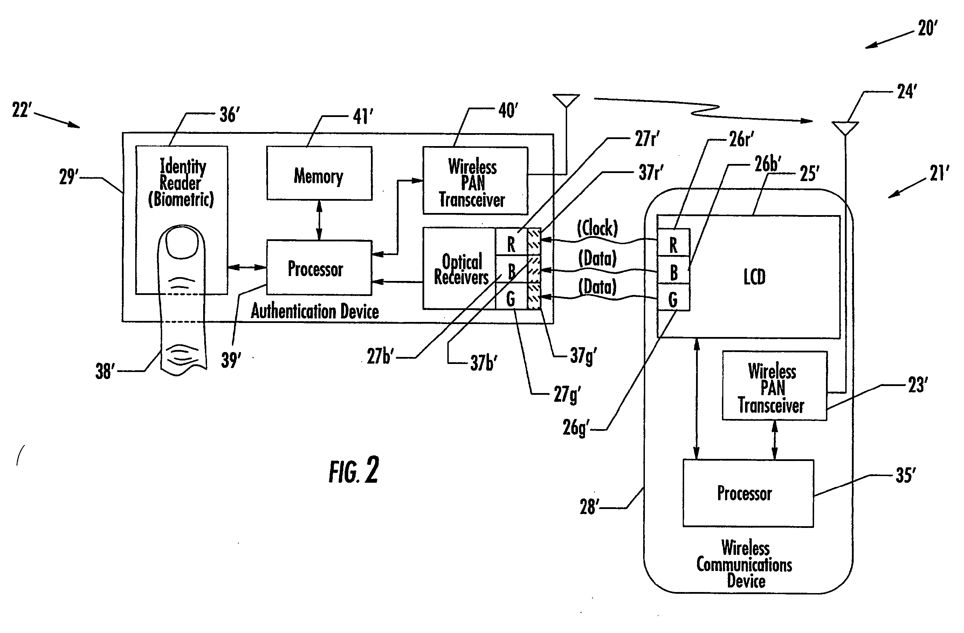

Turning additionally to FIG. 2, an embodiment of the invention in which the first unit **21'** is a wireless communications device and the second unit **22'** is an authentication device is now described. By way of example, the wireless communications device **21'** may be a PDA, laptop, wireless email device, etc., which allows a user to access files stored on a network or desktop computer by a wired and/or wireless communications link. The wireless communications device **21'** further illustratively includes a processor **35'** connected to the LCD **25'** and a wireless PAN transceiver **23'.**

In the illustrated embodiment, a plurality of different color optical transmitters **26r'** (red), **26b'** (blue), and **26g'** (green) each including one or more pixels are used for transmitting optical clock and data signals. In the present example, the red optical transmitter **26r'** transmits a clock signal, while the blue and green optical transmitters **26b', 26g'** transmit data signals. Of course, different signals may be transmitted using different color light in different embodiments, and colors other than those shown may be used as well. Using different colors for signal transmission advantageously allows a greater quantity of data to be sent from the wireless communications device **21'** to the authentication device **22'** as opposed to using a single color of light, although a single color may be used in certain embodiments as well.

To keep unauthorized users from accessing sensitive information, or sending emails from the wireless communications device **21'** which include sensitive information, for example, the authentication device **22'** may advantageously be used to verify that the wireless communications device is being used by the appropriate user, and then enable it for performing such tasks. To this end, the authentication device **22'** illustratively includes an identity reader **36'** for reading a unique identifier (UID) of the user. In the present example the identity reader **36'** is a fingerprint reader, although other readers such as a card reader or keypad for accepting a personal identification number (PIN) as the UID, etc., may also be used, as will be appreciated by those skilled in the art.

The authentication process may be as follows. Before the wireless communications device **21'** can use the authentication device **22'** for authentication purposes, the wireless communications device first establishes a secure PAN with the authentication device. To establish the secure PAN, the wireless communications device **21'** may be required to provide a fairly lengthy device identification code, for example, as will be appreciated by those skilled in the art. The optical transmitters **26r', 26b', 26g'** are well suited for transferring the device identification code to the authentication device **22'** as this saves the user the trouble of keying in a long code. Moreover, this is faster than manually keying in such a code, and it provides additional security since would-be hackers will not see the user typing in the code.

Before accessing a secure network, sending an email, etc., the user of the wireless communications device **21'** would first initiate an authentication sequence via a keypad or other input device (not shown) to establish the PAN with the authentication device **22'.** The user then holds the housing **28'** adjacent the authentication device **22'** so that the optical transmitters **26r', 26b', 26g'** are generally aligned with corresponding red, blue, and green optical receivers **27r', 27b', 27g'** carried by the authentication device **22'.** The processor **35'** causes the optical transmitters **26r', 26b', 26g'** to send optical signals to the authentication device **22'** which communicate the device identification code of the wireless communications device **21'.** Moreover, the user also provides his UID, which in the present example is done by placing his finger **38'** on the fingerprint reader **36'.**

Each of the red, blue, and green optical receivers **27r', 27b', 27g'** illustratively has a respective optical filter **37r', 37b', 37g'** associated therewith for filtering light other than the desired color, as will be appreciated by those skilled in the art. By way of example, the receiving area of the optical receivers **27r', 27b', 27g'** may be a few square millimeters (e.g., three). The optical receivers **27r', 27b', 27g'** may be photodiodes or other suitable light sensing devices, as will be appreciated by those skilled in the art. The transmission area of the optical transmitters **26r', 26b', 26g'** are preferably somewhat larger than the corresponding receiving areas, such as about a square centimeter. Of course, other dimensions may also be used.

The authentication device **22'** further illustratively includes a processor **39'** connected to the optical receivers **27r', 27b', 27g',** the identity reader **36',** a wireless PAN transceiver **40',** and a memory **41'.** The processor **39'** compares the input received via the optical receivers **27r', 27b', 27g'** and the identity reader **36'** with corresponding entries stored in the memory **41'.** If they match, the processor **39'** then cooperates with the wireless PAN transceiver **40'** to send an enabling signal via an accompanying antenna **42'** to the wireless PAN transceiver **23'** of the wireless communication device **21',** which enables the processor **35'** to perform the desired operation(s). Otherwise, a denial signal (or no signal at all) may be sent to the wireless communications device **21'** denying enablement thereof for the desired operation(s).

The authentication device **22'** may also have a secret key stored within the memory **41'** for use by the processor **39'** in initializing the PAN pairing process with the wireless communications device **21',** as will be appreciated by those skilled in the art. Once the devices **21', 22'** have been successively paired in a PAN, it is no longer necessary to hold the two together as they may then communicate via the wireless PAN transceivers **40', 23'** so long as the wireless communications device remains authenticated. The authentication device may further include a user notification device (not shown), such as an audio output transducer, a vibrator, and/or light emitting diode (LED), for example, to inform the user when the optical transmitters **26r', 26b', 26g'** and optical receivers **27r', 27b', 27g'** are aligned, whether the authentication procedure was successful or not, etc. Moreover, the authentication device **22'** may be a portable device also carried by the user, or it may be installed in a desired location, for example.

The authentication procedure may be changed for different applications. For example, in some applications it may be desirable to require the user of the wireless communications device **21'** to be authenticated each time access to a secure network is desired, or before sending each email. In other embodiments, periodic authentications may be more desirable, such as once a day when the wireless communications device **21'** is turned on, for example. Other authentication schedules or procedures may also be used, as will be appreciated by those skilled in the art.

To make sure that a would-be hacker who gains access to the previously authenticated wireless communications device **21'** cannot gain access to the device identification code, the code should preferably not be saved on either the wireless communications device or the authentication device **22'** in a form that is readily retrievable. That is, this code should not be stored in a "contacts" or "address" file that could be easily accessed by a would-be hacker. Moreover, the authentication device may delete the code after the pairing/authentication is complete, for example. For extra security, it may also be desirable to change the device identification code periodically (e.g., once a day).

The LCD **25'** has a refresh rate, which may be 60 Hz, for example, and the optical transmitters **26r', 26b', 26g'** operate based upon the refresh rate. That is, the pixels that make up the optical transmitters **26r', 26b', 26g'** cycle on and off at the given refresh rate of the LCD, which therefore sets the data transmission speed of the optical communications link between the wireless communications device **21'** and the authentication reader **22',** as will be appreciated by those skilled in the art.

It should be noted that the communications system **20'** is but one of many potential implementations of the present invention. In some embodiments, the optical communications link between the first and second units **21, 22** may be used for additional communications between devices, and not necessarily for authentication or enabling of other devices. Other examples of devices that may be used as the first and/or second units **21, 22** include printers, copiers or multi-function devices (MFDs), document scanners, cameras, barcode scanners, satellite navigation system (e.g., GPS/GALILEO) devices, etc. Moreover, the first and second units **21, 22** may communicate via a wireless LAN rather than a PAN, as discussed above.

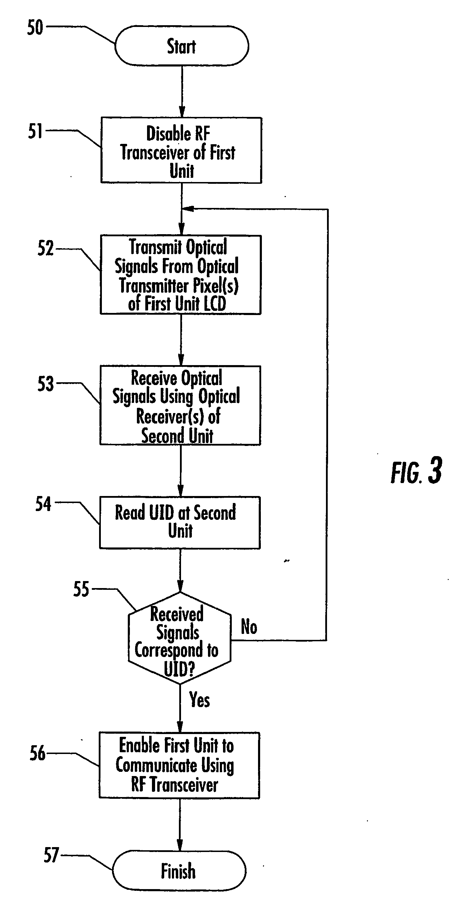

A communications method aspect of the invention is now described with reference to FIG. 3. Referring to the exemplary communications system **20',** beginning at Block **50** the wireless communications device **21'** is disabled for performing a given operation(s) in a starting state (e.g., when it is logged off a network or turned off), at Block **51.** To authenticate the wireless communications device **21',** the user initiates an authentication process, holds the optical transmitters **26r', 26b', 26g'** adjacent the optical receivers **27r', 27b', 27g'** and places his finger on the identity reader **36',** as discussed above. The device identification code is via optical signals from the optical transmitters **26r', 26b', 26g'** and received by the optical receivers **27r', 27b', 27g',** at Block **52-53,** and the UID (i.e., a fingerprint in the present example) is read by the identity reader **36',** at Block **54.**

The processor **39'** of the authentication device **22'** then compares the UID and the received device identification code with corresponding information stored in the memory **41',** at Block **55.** If they match, then the processor **39'** cooperates with the LAN/PAN transceiver **40'** to enable the wireless communications device **21'** for the desired operation(s), at Block **56,** as discussed further above, thus concluding the illustrated method (Block **57**). Otherwise, the authentication procedure may be repeated to provide the proper UID for the wireless communications device **21'.**

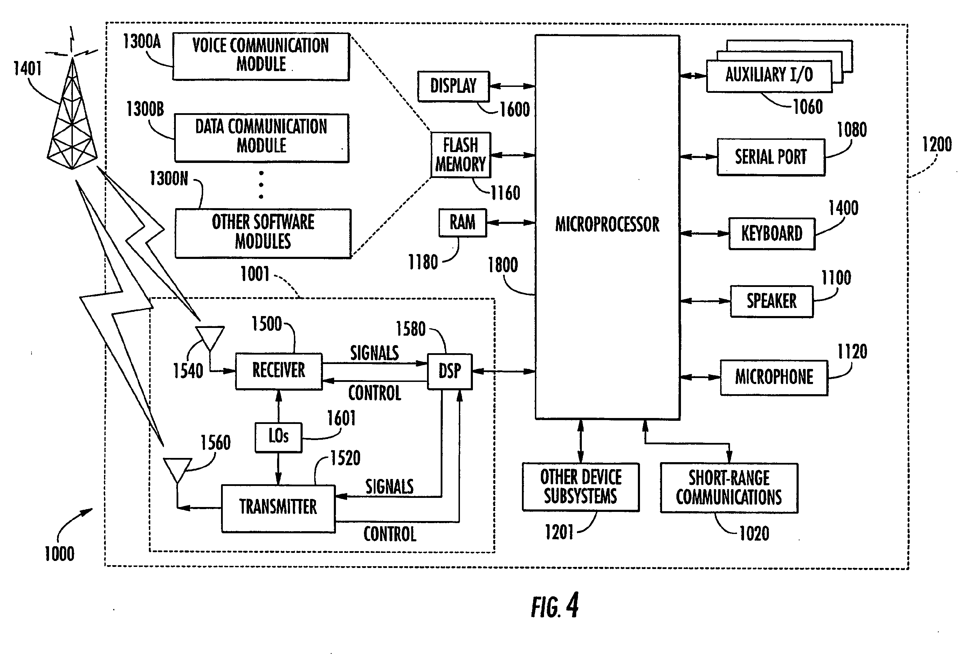

An exemplary device which may be used in accordance with the present invention is a handheld mobile wireless communications device **1000** now described with reference to FIG. 4. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A communications system (20) comprising:
first and second separate units (21,22)
said first unit comprising a liquid crystal display (LCD) (25) including at least one optical transmitter pixel (26) and also comprising a radio frequency RF transceiver (23);
said second wireless unit comprising at least one optical receiver (27) for receiving optical signals from said at least one optical transmitter pixel of said LCD, and also comprising an identity reader (36') for enabling said first unit to communicate using said RF transceiver based upon a received unique identifier.

2. The communications system of Claim 1 wherein said at least one optical transmitter pixel (26) comprises a plurality thereof.

3. The communications system of Claim 2 wherein said plurality of optical transmitter pixels comprise different color optical transmitter pixels.

4. The communications system of Claim 3 wherein said plurality of different color LCD transmitters comprise red, blue and green optical transmitter pixels (26r', 26b', 26g').

5. The communications system of Claim 3 where said at least one optical receiver comprises a plurality of different color optical receivers for respective different colors (27r', 27b', 27g').

6. The communications system of Claim 2 wherein at least one of the plurality of optical transmitter pixels (26r', 26b', 26g')transmits optical clock signals.

7. The communications system of Claim 1 wherein said LCD has a refresh rate, and wherein said at least one optical transmitter pixel (26) operates based upon the refresh rate.

8. The communications system of Claim 1 wherein said at least one optical receiver (27) comprises at least one optical filter (37r', 37b' or 37g').

9. The communications system of Claim 1 wherein said RF transceiver (23) communicates using at least one of a wireless local and personal area network protocol.

10. The communications system of Claim 1 wherein said first unit further comprises a processor (35') connected to said at least one optical transmitter pixel (26).

11. The communications system of Claim 1 wherein said first and second units (21,22) comprise respective first and second portable housings (28, 29).

12. A communications method comprising:
providing first and second separate units (21, 22), said first unit comprising a radio frequency RF transceiver (23) and said second unit comprising an identity reader (36');
transmitting optical signals from at least one optical transmitter pixel (26) of a liquid crystal display (LCD) (25) on the first unit;
receiving the optical signals from the at least one optical transmitter pixel of the LCD using at least one optical receiver (27) on the second unit, and
using the identity reader for reading a unique identifier and enabling the first unit to communicate using the RF transceiver based thereon.

13. The method of Claim 12 wherein the at least one optical transmitter (26) pixel comprises a plurality thereof.

14. The method of Claim 13 wherein the plurality of optical transmitter pixels comprise different color optical transmitter pixels.

15. The method of Claim 14 where the at least one optical receiver (27) comprises a plurality of different color optical receivers (27', 27b', 27g') for respective different color optical transmitter pixels (26', 26b', 26g').

16. The method of Claim 13 wherein transmitting comprises transmitting optical clock signals from at least one of the plurality of optical transmitter pixels (26', 26b', 26g').

17. The method of Claim 12 wherein transmitting comprises operating the at least one optical transmitter pixel (26) based upon a refresh rate.

## Patentansprüche

1. Kommunikationssystem (20), umfassend:
Eine erste und eine zweite getrennte Einheit (21, 22), wobei
die erste Einheit eine Flüssigkristallanzeige (LCD) (25) umfasst, die wenigstens ein optisches Senderpixel (26) aufweist, und auch einen Funkfrequenz RF-Sender-Empfänger (23) umfasst,
die zweite drahtlose Einheit wenigstens einen optischen Empfänger (27) zum Empfangen optischer Signale von dem wenigstens einen optischen Senderpixel der LCD umfasst und auch eine Identitäts-Leseeinrichtung (36') zum Ermöglichen einer Kommunikation für die erste Einheit unter Verwendung des RF-Sender-Empfängers basierend auf einer empfangenen einzigartigen Kennung umfasst.

2. Kommunikationssystem nach Anspruch 1, wobei das wenigstens eine optische Senderpixel (26) eine Vielzahl davon umfasst.

3. Kommunikationssystem nach Anspruch 2, wobei die Vielzahl von optischen Senderpixeln optische Senderpixel unterschiedlicher Farbe umfasst.

4. Kommunikationssystem nach Anspruch 3, wobei die Vielzahl von LCD-Sendern unterschiedlicher Farbe rote, blaue und grüne optische Senderpixel (26r', 26b', 26g') umfasst.

5. Kommunikationssystem nach Anspruch 3, wobei der wenigstens eine optische Empfänger eine Vielzahl von optischen Empfängern unterschiedlicher Farbe für entsprechende unterschiedliche Farben (27r',27b', 27g') umfasst.

6. Kommunikationssystem nach Anspruch 2, wobei wenigstens eines der Vielzahl von optischen Senderpixeln (26r', 26b', 26g') optische Taktsignale überträgt.

7. Kommunikationssystem nach Anspruch 1, wobei die LCD eine Wiederholrate aufweist und wobei das wenigstens eine optische Senderpixel (26) basierend auf der Wiederholrate wirkt.

8. Kommunikationssystem nach Anspruch 1, wobei der wenigstens eine optische Empfänger (27) wenigstens einen optischen Filter (37r', 37b' oder 37g') umfasst.

9. Kommunikationssystem nach Anspruch 1, wobei der RF-Sender-Empfänger (23) unter Verwendung von wenigstens einem drahtlosen lokalen oder persönlichen Netzprotokoll kommuniziert.

10. Kommunikationssystem Anspruch 1, wobei die erste Einheit weiterhin einen Prozessor (35'), der mit dem wenigstens einen optischen Senderpixel (26) verbunden ist, umfasst.

11. Kommunikationssystem nach Anspruch 1, wobei die erste und die zweite Einheit (21, 22) entsprechende erste und zweite tragbare Gehäuse (28, 29) umfassen.

12. Kommunikationsverfahren, umfassend:
Bereitstellen einer ersten und einer zweiten getrennten Einheit (21, 22), wobei die erste Einheit einen Funkfrequenz RF-Sender-Empfänger (23) umfasst und die zweite Einheit eine Identitäts-Leseeinrichtung (36'), Übertragen von optischen Signalen von wenigstens einem optischen Senderpixel (26) einer Flüssigkristallanzeige (LCD) (25) an der ersten Einheit,
Empfangen der optischen Signale von dem wenigstens einen optischen Senderpixel der LCD unter Verwendung von wenigstens einem optischen Empfänger (27) an der zweiten Einheit, und
Verwenden der Identitäts-Leseeininrichtung zum Lesen einer einzigartigen Kennung und zum Ermöglichen einer Kommunikation für die erste Einheit unter Verwendung des RF-Sender-Empfängers basierend darauf.

13. Verfahren nach Anspruch 12, wobei das wenigstens eine optische Senderpixel (26) eine Vielzahl davon umfasst.

14. Verfahren nach Anspruch 13, wobei die Vielzahl von optischen Senderpixeln optische Senderpixel unterschiedlicher Farbe umfasst.

15. Verfahren nach Anspruch 14, wobei der wenigstens eine optische Empfänger (27) eine Vielzahl von optischen Empfängern (27', 27b', 27g') unterschiedlicher Farbe für entsprechende optische Senderpixel (26', 26b', 26g') unterschiedlicher Farbe umfasst.

16. Verfahren nach Anspruch 13, wobei ein Übertragen ein Übertragen von optischen Taktsignalen von wenigstens einem der Vielzahl von optischen Senderpixeln (26', 26b', 26g') umfasst.

17. Verfahren nach Anspruch 12, wobei ein Übertragen ein Wirken des wenigstens einen optischen Senderpixels (26) basierend auf einer Wiederholrate umfasst.

## Revendications

1. Système (20) de communication comportant :
un premier et un deuxième module (21, 22) séparés ;
ledit premier module comportant un affichage (25) à cristaux liquides (LCD) incluant au moins un pixel (26) émetteur optique et comportant également un émetteur (23) R.F. radiofréquence ;
ledit deuxième module sans fils comportant au moins un récepteur (27) optique destiné à recevoir des signaux optiques en provenance dudit au moins un pixel émetteur optique dudit LCD, et comportant également un lecteur (36') d'identité destiné à permettre audit premier module de communiquer en utilisant ledit émetteur-récepteur R.F. sur la base d'un identifiant unique reçu.

2. Système de communication selon la revendication 1, dans lequel ledit au moins un pixel (26) émetteur optique comporte une pluralité de celui-ci.

3. Système de communication selon la revendication 2, dans lequel ladite pluralité des pixels émetteurs optiques comporte des pixels émetteurs optiques de couleur différents.

4. Système de communication selon la revendication 3, dans lequel ladite pluralité d'émetteurs LCD de couleur différents comporte des pixels (26r', 26b', 26g') émetteurs optiques rouges, bleus et verts.

5. Système de communication selon la revendication 3, où ledit au moins un récepteur optique comporte une pluralité de récepteurs optiques de couleur différents pour des couleurs (27r', 27b', 27g') différentes respectives.

6. Système de communication selon la revendication 2, dans lequel au moins l'un de la pluralité de pixels (26r', 26b', 26g') émetteurs optiques émet des signaux d'horloge optiques.

7. Système de communication selon la revendication 1, dans lequel ledit LCD présente un taux de rafraîchissement, et dans lequel ledit au moins un pixel (26) émetteur optique fonctionne sur la base du taux de rafraîchissement.

8. Système de communication selon la revendication 1, dans lequel ledit au moins un récepteur (27) optique comporte au moins un filtre (37r', 37b' ou 37g') optique.

9. Système de communication selon la revendication 1, dans lequel ledit émetteur-récepteur (23) R.F. communique en utilisant au moins l'un d'un protocole de réseau local et de zone personnelle sans fils.

10. Système de communication selon la revendication 1, dans lequel ledit premier module comporte de plus un processeur (35') raccordé audit au moins un pixel (26) émetteur optique.

11. Système de communication selon la revendication 1, dans lequel lesdits premier et deuxième modules (21, 22) comportent des premier et deuxième boîtiers (28, 29) portables respectifs.

12. Procédé de communication comportant :
la fourniture d'un premier et d'un deuxième module (21, 22) séparés, ledit premier module comportant un émetteur-récepteur (23) R.F. radiofréquence et ledit deuxième module comportant un lecteur (36') d'identité ;
l'émission de signaux optiques à partir d'au moins un pixel (26) émetteur optique d'un affichage (25) à cristaux liquides (LCD) dans le premier module ;
la réception des signaux optiques en provenance du au moins un pixel émetteur optique du LCD en utilisant au moins un récepteur (27) optique dans le deuxième module, et
utilisant le lecteur d'identité pour lire un identifiant unique et permettre au premier module de communiquer sur la base de celui-ci en utilisant l'émetteur-récepteur R.F.

13. Procédé selon la revendication 12, dans lequel le au moins un pixel (26) émetteur optique comporte une pluralité de celui-ci.

14. Procédé selon la revendication 13, dans lequel la pluralité des pixels émetteurs optiques comporte des pixels émetteurs optiques de couleur différents.

15. Procédé selon la revendication 14, dans lequel le au moins un récepteur (27) optique comporte une pluralité de récepteurs (27', 27b', 27g') optiques de couleur différents pour des pixels (26', 26b', 26g') émetteurs optiques de couleur différents respectifs.

16. Procédé selon la revendication 13, dans lequel l'émission comporte une émission de signaux d'horloge optiques à partir d'au moins l'un de la pluralité de pixels (26', 26b', 26g') émetteurs optiques.

17. Procédé selon la revendication 12, dans lequel l'émission comporte le fonctionnement du au moins un pixel (26) émetteur optique sur la base d'un taux de rafraîchissement.
